# EUROPÄISCHE PATENTANMELDUNG

(11) **EP 0 907 134 A1**
(43) Veröffentlichungstag der Anmeldung: **07.04.1999**
(21) Anmeldenummer: 97115782.1
(22) Anmeldetag: 11.09.1997
(51) Int. Cl.: G06F 17/60

(54) **Verfahren zur rechnergestützten Zahlungsabwicklung über Zahlungssysteme**

(71) Anmelder: Esd Information Technology Entwicklungs GmbH, 04430 Dölzig (DE)
(72) Erfinder: Bugovics, Jozsef, 06886 Lutherstadt Wittenberg (DE)
(74) Vertreter: Haussingen, Peter

(57) **Zusammenfassung**

Die Erfindung bezeichnet ein Verfahren zur rechnergestützten Zahlungsabwicklung über Zahlungssysteme unter der Zwischenschaltung eines Finanzdienstleisters (3) der dieses Zahlungssystem (4) unterstützt, wobei eine sichere Übertragung von Daten über Datenverbindungen (6a), (6b), (6c) in Netzen (5) gewährleistet wird. Die Aufgabe besteht darin, dem Händler (2) mehrere für den Kunden (1) mögliche Zahlungssysteme (4) zur Verfügung zu stellen, ohne den Händler (2) selbst zur Integration dieser Zahlungssysteme (4) zu zwingen. Dies wird gelöst, indem von einem Vertragsmodul (8) des Finanzdienstleisters (3) dem Händler (2) ein neutrales Händler-Vertragsprotokoll (19) zur Verfügung gestellt wird, über welches eine beidseitige Verpflichtung zwischen dem Händler (2) und dem Kunden (1) abgeschlossen und diese dem Vertragsmodul (8) übermittelt wird. In den weiteren Verfahrensschritten wird die Zahlungsabwicklung des Kunden (1) in seinem speziellen Zahlungssystem (4) sichergestellt und dessen Status dem Händler (5) übermittelt.

## Beschreibung

Die Erfindung bezeichnet ein Verfahren zur rechnergestützten Zahlungsabwicklung über Zahlungssysteme, betreffend einer beidseitigen Verpflichtung, insbesondere eines Kaufvertrages, zwischen einem Kunden und einem Händler unter der Zwischenschaltung eines Finanzdienstleisters, insbesondere einer Bank, der dieses Zahlungssystem unterstützt, wobei durch spezielle Übertragungssysteme eine sichere Übertragung von Daten über Datenverbindungen in Netzen gewährleistet wird.

Üblicherweise bietet ein Händler den Kunden bestimmte Waren an, die der Kunde auswählt. Hat sich der Kunde zum Kauf entschlossen, kommt es zum Abschluß eines Kaufvertrages zwischen dem Kunden und dem Händler. In Folge des Vertrages zahlt der Kunde in einem Zahlungsverfahren (bsw. durch Barzahlung) den Kaufpreis und der Händler übergibt die verkaufte Ware.

Eine modifizierte Variante dieses Zahlungsverfahrens stellt der Kauf über Kreditkarten oder über ähnliche Zahlungssysteme dar. Dabei wird ein Zahlungssystembetreiber, zumeist eine Bank, zwischen den Händler und den Kunden geschaltet. Der Kunde bezahlt demnach nicht direkt, sondern der Zahlungssystembetreiber bürgt (mittels der Kreditkarte) für die Zahlungsfähigkeit des Kunden. Zu einem späteren Zeitpunkt bucht der Zahlungssystembetreiber den fälligen Kaufpreis vom Konto des Kunden ab und überweist den Kaufpreis auf das Konto des Händlers. Für diesen Vorgang verlangt er üblicherweise eine Gebühr. In der Praxis sind unterschiedliche Zahlungssysteme mit verschiedenen Konditionen für unterschiedliche Einsatzzwecke notwendig.

Viele moderne Zahlungssysteme sind als Sonderfunktionen von DVA (Datenverarbeitungsanlagen) rechnergestützt ausführbar (IPC G06F 17/60). Dieser technische Hintergrund wird beispielsweise in der Druckschrift EP OS 0668 579 A2 im Zusammenhang mit Keditkarten und in der Druckschrift WO 95/19010 im Zusammenhang mit Homebankingsystemen erwähnt. Diese unterschiedlichen Zahlungssysteme der einzelnen Zahlungssystembetreiber sind jeweils modifiziert und in der Regel untereinander nicht oder nur eingeschränkt kompatibel. Bezüglich des internationalen Zahlungsverkehrs sind nationale Zahlungsmittel mengenmäßig verbreiteter als einzelne internationale Zahlungssysteme.

Moderne Übertragungssysteme für Informationen für Datenverbindungen im Fernverkehr (IPC H04L), beispielsweise das Internet, ermöglichen die Werbung des Händlers über diese Übertragungssysteme. Dazu bietet der Händler eine Werbeinformation an, über welche er seine Waren präsentiert. Mittels eines vorgefertigten Kaufvertrages kann der Kunde bequem den Kaufvertrag rechtskräftig werden lassen, indem er den unterschriebenen Kaufvertrag an den Händler sendet, beispielsweise per Post, per Fax oder über andere (rechtlich anerkannte) elektronische Übertragungssysteme.

Bei der Übermittlung von Daten (persönliche Informationen aus Kaufverträgen, Einzelheiten der Zahlungsabwicklung) auf modernen Übertragungssystemen (z.B. im Internet) besteht jedoch die Gefahr der unberechtigten Kenntnis, Benutzung oder Modifizierung dieser Daten. Aus diesem Grund wurden kryptographische Verfahren entwickelt, die auch auf elektronischen Wege eine sichere Übertragung, das heißt sicher vor Manipulation und Zugriff, von Daten zwischen zwei Teilnehmern ermöglichen (IPC H04L 9/00). Dieser technische Hintergrund wird bsw. in der Druckschrift WO 97/16779 im Zusammenhang mit der Eingabesicherung und Informationsübertragung sowie in der Druckschrift EP OS 0668 580 A1 im Zusammenhang mit der Authentisierung der Teilnehmer erwähnt.

Derartige kryptographische Verfahren werden jeweils in einem spezifischen Zahlungsmodul realisiert und können Hardware basierend und Software basierend sein. Im ersten Fall benötigt jeder Teilnehmer eine (günstig individuelle) Hardware zur Ver- und Entschlüsselung der Daten. Im zweiten Fall wird dies bei zumindest einem Teilnehmer durch identische Hardware mit (günstig individuellen) verschlüsselten Parametern erzielt (ändern sich zumeist in der Zeitspanne einer möglichen Entschlüsselung dieser). Bei Finanzdienstleistern, insbesondere bei Banken, ist eine rechnergestützte Zahlungsabwicklung (IPC G06F 19/00) bei modernen Übertragungssystemen (z.B. im Internet) nur Ansatzweise mit spezifischen Zahlungssystemen etabliert (z.B. SET(secure electronic transition)).

Durch die vielfältigen Möglichkeiten zum Abschluß eines Vertrages zwischen dem Kunden und dem Händler, insbesondere auf elektronischem Wege, hat der Kunde die Möglichkeit, zwischen den verschiedenen Zahlungsverfahren (Barzahlung per Nachnahme, Überweisung, Lastschrift, Kreditkarte, ...), den möglichen Zahlungssystemen (z.B. VISA-Card; EC-Kreditkarte; SET, PIN/TAN(personal identity number/transaction indetity number), Geldkarte, ...) und den damit verbundenen Konditionen auszuwählen. Dies setzt jedoch voraus, daß der Händler diese Zahlungsverfahren und Zahlungssysteme anbietet.

Im Interesse der Kundenorientierung ist der Händler in der Regel bemüht, sämtliche Zahlungsverfahren und Zahlungssysteme anzubieten. Dieses Bemühen bedingt jedoch für den Händler notwendig die Integration dieser Zahlungssysteme, verbunden mit einem großen organisatorischen Aufwand (z.B. jeweils verschiedene Konten), Unkosten (für die Teilnahme an den jeweiligen Zahlungssystemen), einem hohen Kostenrisiko und der Notwendigkeit, die notwendigen Mittel für die entsprechenden Zahlungssysteme (Kreditkartenleser, Zahlungsmodule) stets einsatzbereit zur Verfügung zu halten. Aus diesen Gründen sind Zahlungssysteme für Händler sehr kompliziert integrierbar und neu entwickelte schwer in großem Maßstab einzuführen.

Die Aufgabe der Erfindung ist es, ein oben beschriebenes Verfahren zur rechnergestützten Zahlungsabwicklung über Zahlungssysteme zu entwickeln, welche die aufgeführten Nachteile beseitigt und dem Händler mehrere für den Kunden mögliche Zahlungssysteme zur Verfügung stellt, ohne den Händler selbst zur Integration dieser Zahlungssysteme zu zwingen.

Die Aufgabe wird durch die im Patentanspruch 1 aufgeführten Merkmale gelöst. Bevorzugte Weiterbildungen ergeben sich aus den Unteransprüchen.

Das Wesen der Erfindung besteht darin, daß über eine geschlossene Datenverbindung über Netze
in einem 1. Schritt
der Kunde seine gewünschten Waren und Zahlungssysteme dem Händler über die Datenverbindung mitteilt und danach durch den Händler die Kundeninitialisierung des Kunden erfolgt,
in einen 2. Schritt
der Händler über eine Datenverbindung zu einem Vertragsmodul bei einem Finanzdienstleister die Konditionen für die gewünschten Zahlungssysteme abfragt und dieses sie ihm sicher übermittelt,
in einem 3. Schritt
der Händler über die Datenverbindung dem Kunden sicher ein Auswahl-Modul übermittelt, welches, jeweils einzeln für die gewünschten und verfügbaren Zahlungssysteme, das konkrete Angebot des Händlers an den Kunden beinhaltet,
in einem 4. Schritt
der Kunde ein einzelnes konkretes Angebot des Händlers im Auswahl-Modul auswählt und damit eine beidseitige Verpflichtung eingeht, deren Inhalt das Auswahl-Modul sicher über die Datenverbindung dem Händler und sicher über die Datenverbindung dem Vertragsmodul übermittelt, welches sie auf ihre Richtigkeit überprüft und unter der eindeutigen Prozeßnummer speichert,
in einem 5. Schritt
das Auswahl-Modul die für das ausgewählte spezifische Zahlungssystem verfügbare sichere Datenverbindung zwischen einem spezifischen Kunden-Zahlungsmodul und dem zugeordneten spezifischen Vertragsmodul-Zahlungsmodul aktiviert und den Inhalt der beidseitigen Verpflichtung dem spezifischen Zahlungssystem übergibt,
in einem 6. Schritt
der Kunde die notwendigen Ergänzungen in dem spezifischen Zahlungssystem vornimmt und die Zahlungsabwicklung mit dem Händler über das spezifische Kunden-Zahlungsmodul, die Datenverbindung und das spezifische Vertragsmodul-Zahlungsmodul sicher anweist,
in einem 7. Schritt
das spezifische Vertragsmodul-Zahlungsmodul die angewiesene Zahlungsabwicklung an eine spezifische Zahlungssystem-DVA des spezifischen Zahlungssystembetreibers tätigt,
in einem 8. Schritt
das Vertragsmodul die spezifische Zahlungssystem-DVA des spezifischen Zahlungssystembetreibers liest, dessen Einträge mit dem gespeicherten Inhalt der beidseitigen Verpflichtung vergleicht und über die Datenverbindung den Händler sicher über den Status der Zahlungsabwicklung informiert,
in einem 9. Schritt
die Überweisung von der spezifischen Zahlungssystem-DVA auf das Konto des Händlers erfolgt.

Die Vorteile der Erfindung liegen insbesondere in Folgendem:
- Der Händler muß die einzelnen spezifischen Zahlungssysteme dritter Zahlungssystembetreiber nicht selbst integrieren, da dies (jeweils ein mal) der Finanzdienstleister des Händlers übernimmt.
- Das Vertragsmodul überwacht im Interesse des Händlers die Erfüllung der sich aus dem beidseitig verpflichtenden Vertrag für den Kunden ergebende Zahlungsverpflichtung, die dieser mit einem dritten Zahlungssystembetreiber abwickelt. Der Händler erhält dadurch die notwendige Sicherheit für die Erfüllung der Verpflichtung seinerseits.
- Speziell für die Datenverbindung Händler - Finanzdienstleister ist vorteilhaft, daß der Händler eine zertifizierte Zahlungsbestätigung für die Erfüllung der sich aus der beidseitigen Verpflichtung ergebenden Zahlungsanweisung des Kunden erhält, die Signatur prüfen kann und alle notwendigen Prozeßdaten im Vertragsprotokoll mitgeliefert bekommt.
- Speziell für die Datenverbindung Händler - Kunde besteht eine Kanalsicherheit (bsw. über einen SSL), die Händleridentität und Richtigkeit der Bestelldaten ist durch den Kunden prüfbar, das Vertragsprotokoll hat alle notwendigen Prozeßdaten, so daß bei Datenausfall in den Basissystemen das Vertragsprotokoll aus sich selbst regeneriert werden kann. Der Händler arbeitet stets mit demselben neutralen Vertragsprotokoll, unabhängig von dem spezifischen Zahlungssystembetreiber des Kunden. Dieser wiederum kann seine gewohnten Zahlungsanweisungen über seinen spezifischen Zahlungssystembetreiber abwickeln und nutzt dessen Möglichkeiten voll aus.
- Speziell für die Verbindung Kunde - Finanzdienstleister, da die Kundendaten nicht durch das Vertragsmodul an den Finanzdienstleister übergeben werden. Die Zahlungsabwicklung erfolgt direkt zwischen dem Kunden und dem spezifischen Zahlungssystembetreiber (Eigenschaften des spezifischen Zahlungssystems gelten)
- Alle Datenverbindungen über Netze sind durch die Verwendung von Krytographie sicher.

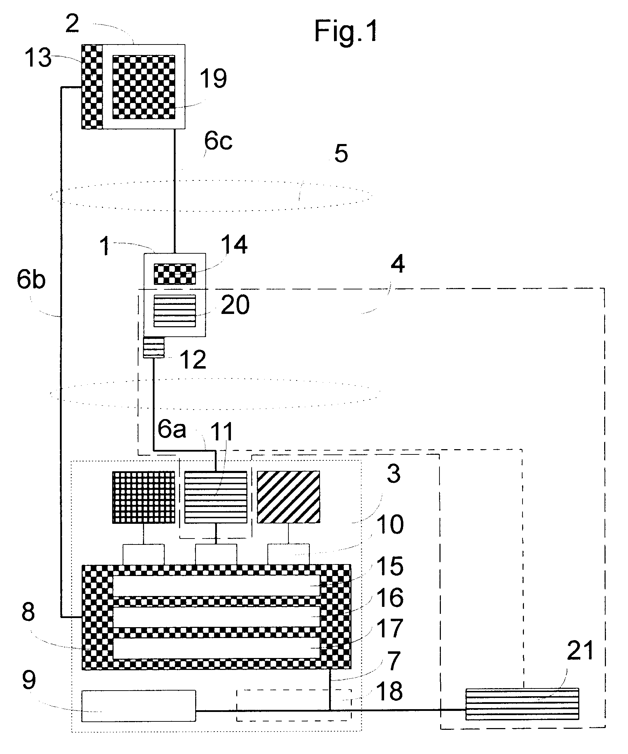

Die Erfindung wird als Ausführungsbeispiel an Hand von
Fig. 1 als Schema einer Zahlungsabwicklung
näher erläutert.

Nach Fig. 1 wird eine Zahlungsabwicklung notwendig, wenn ein Kunde 1 die Werbung eines Händlers 2, welcher mit einem Finanzdienstleister 3 (insbesondere mit Banken) in Geschäftsverbindung steht, prüft, eine beidseitige Verpflichtung (z.B. einen Kaufvertrag) einzugehen beabsichtigt und die ihn interessierenden gewünschten Waren und Zahlungssysteme 4 (z.B. SET, EURO-Cash) auswählt. Für eine Übertragung von Daten sind der Finanzdienstleister 3 mit dem Kunden 1, der Finanzdienstleister 3 mit dem Händler 2 sowie der Kunde 1 mit dem Händler 2 über Netze 5 (z.B. dem Internet) bidirektional durch geschlossene Datenverbindungen [6a, 6b, 6c] verbunden. Weiterhin besteht eine Datenverbindung 7 zwischen dem Finanzdienstleister 3 und dem spezifischen Zahlungssystem 4 sowie innerhalb derer Strukturen (bsw. zu den zugeordneten Konten). Der Finanzdienstleister 3 ist mit dem Kunden 1, abhängig vom spezifischen Zahlungssystem 4, über die Datenverbindungen 6a sicher verbunden, ebenso der Finanzdienstleister 3 mit dem Händler 2 und dieser mit dem Kunden 1 über die Datenverbindung 6b und 6a. Dies kann Hardware basierend oder Software basierend durch geeignete Übertragungssysteme (bsw. über Verschlüsselung mit einem 128bit SSL) erfolgen. Der Zahlungsvorgang zwischen dem Kunden 1 und dem Händler 2 erfolgt vollständig innerhalb des spezifischen Zahlungssystems 4. Die Überwachung und Steuerung des Zahlungsvorgangs über spezifische Zahlungssysteme 4 erfolgt über das Vertragsmodul 8, welcher über die Finanzdienstleister-EDV 9 auf das Konto des Händlers 2 zugreifen kann. Dazu steht der Vertragsmodul 8 des Finanzdienstleisters 3 des Händlers 2 über je einen Zahlungssystemadapter 10 mit den jeweiligen spezifischen Vertragsmodul-Zahlungsmodulen 11 des zugehörigen Zahlungssystems 4 im Datenaustausch. Innerhalb des Zahlungssystems 4 besteht intern ein Datenaustausch zwischen dem Kunden 1 und dem Finanzdienstleister 3 des Händlers 2 über ein Kunden-Zahlungsmodul 12 und dem Vertragsmodul-Zahlungsmodul 11. Außerhalb des Zahlungssystems 4 besteht ein Datenaustausch zwischen dem Vertragsmodul 8 über ein Händler-Modul 13 und ein Auswahl-Modul 14 mit dem Kunden 1. Die einzelnen Funktionen zum Verfahren der Zahlungsabwicklung werden vorteilhaft über ein separates Prozeßverwaltungsmodul 15, ein Risikomanagementmodul 16 und ein Händlerverwaltungsmodul 17 innerhalb des Vertragsmoduls 8 ausgeführt. Die Anpassung der einzelnen Protokolle zum Datenaustausch der Finanzdienstleister-EDV 9 mit denen anderer erfolgt vorteilhaft über einen optionalen Protokollwandlermodul 18. Dieses Verfahren der Zahlungsabwicklung unterstützt bei dem Händler 2 im Vertragsprotokoll vorteilhaft ein neutrales Händler-Vertragsprotokoll 19 und bei dem Kunden 1 zur Zahlungsabwicklung eine dem spezifischen Zahlungssystem 4 spezifische Zahlungsanweisung (20). Innerhalb des spezifischen Zahlungssystems 4 wird die Zahlungsabwicklung über eine spezifische Zahlungssystem-EDV 21 (bsw. mit einem Zwischenkonto, welches als Sammelkonto dient) vorgenommen. Die spezifische Zahlungssystem-EDV 21 nimmt die Zahlungsanweisung des Kunden 1 bezüglich des Händlers 2 entsprechend den spezifischen Bedingungen im spezifischen Zahlungssystem 4 vor.
Die Zahlungsabwicklung erfolgt in nachfolgenden Schritten:

### 1. Schritt:

Durch Auswahl in einem Shoppingsystem des Händlers 2 erfolgt zuerst das Füllen eines Warenkorbes durch Kunden 1. Nach der Produktauswahl gibt der Kunde 1 dem Händler 2 an, mit welchem Zahlungssystem 4 er zahlen kann oder möchte. Er macht eine Preisanfrage bezüglich der verfügbaren Zahlungssysteme 4. Danach erfolgt durch den Händler 2 die Kundeninitialisierung des Kunden 1, falls dieser noch nicht initialisiert ist. Es ist vorstellbar, das dies dadurch geschieht, indem der Kunde 1 das Auswahl-Modul 14 als Plug-In oder Applet auf seinen PC lädt und anschließend die Zahlungssysteme 4 konfiguriert, die er unterstützen. Dabei gibt er diese vielleicht schon auf dem PC vorhandenen spezifischen Kunden-Zahlungsmodule 12 an

### 2. Schritt:

Der Händler 2 tätigt eine Bewertungsanfrage für die Zahlungssysteme 4, indem er über die Datenverbindung 6b zu einem Vertragsmodul 8 bei einem Finanzdienstleister 3 die Konditionen für die gewünschten Zahlungssysteme 4 abfragt und dieses sie ihm sicher übermittelt. Dabei arbeitet der Händler 2 stets mit demselben neutralen Händler-Vertragsprotokoll 19. Die sichere Verbindung wird zwischen dem Vertragsmodul 8 und dem Händler-Modul 13 aufgebaut. Das Vertragsmodul 8 überprüft die Produkt- und Zahlungsanforderungsinformationen auf ihre Richtigkeit (und optional der Validität des Händlers 2).

### 3. Schritt:

Der Händler 2 übermittelt über die Datenverbindung 6c dem Kunden 1 sicher ein Auswahl-Modul 14, welches, jeweils einzeln für die gewünschten und verfügbaren Zahlungssysteme 4, das konkrete Angebot des Händlers 2 (Kaufabsichts- und Zahlungsarteinschränkungen) an den Kunden 1 beinhaltet.

### 4. Schritt:

Der Kunde 1 wählt ein einzelnes konkretes Angebot des Händlers 2 im Auswahl-Modul 14 aus (der Kunde 1 bestätigt den Kauf und das Zahlungssystem 4) und geht damit eine beidseitige Verpflichtung ein, deren Inhalt das Auswahl-Modul 14 sicher über die Datenverbindung 6c dem Händler 2 und sicher über die Datenverbindung 6b dem Vertragsmodul 8 übermittelt, welches sie (die Produkt- und Zahlungsanforderungsinformationen) auf ihre Richtigkeit (und optional der Validität des Händlers 2) überprüft und bis zur Bestätigung der Zahlung unter der eindeutigen Prozeßnummer speichert. Anschließend werden die Zahlungs- Prozeß- und Produktinformationen an das Clearingsystem des Finanzdienstleisters 3 übertragen. Es ist vorstellbar, daß ebenfalls eine Übertragung der Produktliste mit entsprechenden Prozeßinformationen an den Kunden 1 erfolgt.

### 5. Schritt:

Es erfolgt die standardisierte Zahlungsabwicklung durch den Kunden 1. Er aktiviert über das Auswahl-Modul 14 die für das ausgewählte spezifische Zahlungssystem 4 verfügbare (ein spezifisches Kunden-Zahlungsmodul 12 des Finanzdienstleisters 3 oder das eines dritten Zahlungssystembetreibers) sichere Datenverbindung 6a zwischen einem Kunden-Zahlungsmodul 12 und dem zugeordneten spezifischen Vertragsmodul-Zahlungsmodul 11 und übergibt den Inhalt der beidseitigen Verpflichtung dem spezifischen Zahlungssystem 4. Optional erfolgt eine Vorinitialisierung des Kunden-Zahlungsmodul 12 mit Betrag, Währung und weiteren Daten Es ist vorstellbar, daß das Kunden-Zahlungsmodul 12 des Finanzdienstleisters 3 selbst stets verfügbar ist, indem es als Plug-In oder Applet auf den PC des Kunden 1 übertragen wird.

### 6. Schritt:

Der Kunde 1 nimmt die notwendigen Ergänzungen in dem spezifischen Zahlungssystem 4 vor und weist die Zahlungsabwicklung mit dem Händler 2 über das spezifische Kunden-Zahlungsmodul 12, die Datenverbindung 6a und das spezifische Vertragsmodul-Zahlungsmodul 11 sicher an. Dabei arbeitet der Kunde 1 mit den gewohnten spezifischen Zahlungsanweisungen 20 seines gewählten Zahlungssystemanbieters. Es ist vorstellbar, daß der Finanzdienstleister 3 für den Kunden 1 überhaupt nicht erkennbar in Erscheinung tritt.

### 7. Schritt:

Das spezifische Vertragsmodul-Zahlungsmodul 11 tätigt die angewiesene Zahlungsabwicklung über die spezifische Zahlungssystem-EDV 21 an ein Zwischenkonto des spezifischen Zahlungssystembetreibers. Die Zahlungsantwort des spezifischen Zahlungssystems 4 wird vom Vertragsmodul 8 registriert. Bei erfolgreichem Zahlungseingang wird der Betrag später dem (Clearing) Sammelkonto des Finanzdienstleisters 3 gutgeschrieben und in das Konten- oder Verwaltungssystem eingetragen.

### 8. Schritt:

Das Vertragsmodul 8 liest über die spezifische Zahlungssystem-EDV 21 das Zwischenkonto des spezifischen Zahlungssystembetreibers, vergleicht dessen Einträge mit dem gespeicherten Inhalt der beidseitigen Verpflichtung und informiert sicher über die Datenverbindung 6b den Händler 2 über den Status der Zahlungsabwicklung (Zahlungsbestätigung). Dadurch hat das Vertragsmodul 8 die Erfüllung der sich aus dem beidseitig verpflichtenden Vertag ergebende Zahlungsverpflichtung überwacht, wobei die Zahlungsabwicklung direkt über spezifische Zahlungssysteme 4 erfolgte. Der Händler 2 hat die Gewähr (für deren Erfüllung der Finanzdienstleister 3 bürgen kann), daß die Zahlungsverpflichtung des Kunden 1 erfüllt wurde und kann seinerseits die Ware an den Kunden 1 übereignen.

### 9. Schritt:

Die Überweisung vom Zwischenkonto auf das Konto des Händlers 2 erfolgt. Es ist vorstellbar, daß in vereinbarten zeitlichen Abständen eine Abarbeitung der getätigten Transaktionen erfolgt, bsw. ein Abgleich der Eingänge auf das Sammelkonto mit deren Abbuchungen, eine Fehler- und Sonderfallbehandlung bei Problemen, eine Provisionsabrechnung für den Händler 2, ein monatliches Versenden der Abrechnung (auch elektronisch oder auf Papier in unterschiedlichen Detailierungsgraden möglich) usw.

### Vorteilhaft ist im 10. Schritt:

Der Händler 2 erstattet dem Finanzdienstleister 3 eine Gebühr entsprechend eines Vertrages zwischen dem Händler 2 und dem Finanzdienstleister 3. So ist es denkbar, daß bei der Überweisung der Beträge an den Händler 2 eine Provision des Finanzdienstleisters 3 einbehalten wird, bsw. indem über das Protokollwandlermodul 18 die Überweisungen vom Sammelkonto an die Händlerkonten (bsw. Girokonto), abzüglich der Margen des Clearingbetreibers, initiiert werden. So ist es vorteilhaft vorstellbar, daß die einzelnen Kunden 1 abhängig von Zahlungssystem 4 und Risikogruppe mit den realen Kosten der Geldbeschaffung bewertet werden (incl. Rabat durch Volumen und Margen). Diese können in Sammelkonten zusammengefaßt, mit den Systembetreiberkosten (ca. 0,1%) beaufschlagt sowie mit weiterberechneten Kosten und auf die einzelnen Händlerkonten aufgeteilt werden.

Bezüglich der Gewährleistung einer sicheren Datenverbindung 6a, 6b, 6c ist es vorstellbar, daß vorbekannte kryptographische Systeme in der nachfolgenden Art verwendet werden:
Der Händler 2 sendet ein teilweise verschlüsseltes Datenpaket (bsw. bestehend aus: verschlüsselte Ware, unverschlüsselte Ware, Zahlungstyp, eindeutige Prozeßnummer, Hashwert der verschlüsselten Ware, Registernummer des Händlers 2 und dessen Signatur, Public Key des Händlers 2) an den Kunden 1 (ohne Kundendaten und Warendaten). Anschließend prüft der Kunde 1 die Transaktionsdaten auf Identität (bsw. prüfbar mit einem zertifizierten Public Key) und führt eine Überprüfung des verschlüsselten Wareninhalts (bsw. durch Hash-Erzeugung über dem lesbaren Wareninhalt und Vergleich mit dem mitgelieferten Hash des verschlüsselten Wareninhalts). Anschließend sendet der Kunde 1 das Datenpaket an das Prozeßverwaltungsmodul 15 des Finanzdienstleisters 3 (gegebenenfalls mit Angaben zum Zahlungstyp ergänzt). Der Finanzdienstleister 3 selbst erhält nur eine Prozeßnummer. Die Transaktion wird vom Vertragsmodul 8 angenommen und das eigentliche spezifische Vertragsmodul-Zahlungsmodul 11 aufgerufen, wobei die Prozeßnummer weitergeleitet wird. Das spezifische Vertragsmodul-Zahlungsmodul 11 baut spezifisch eine sichere Verbindung 6a zum spezifischen Kunden-Zahlungsmodul 12 auf. Anschließend erfolgt die Abwicklung der Zahlung (zwischen dem spezifischen Zahlungssystembetreiber 3 und dem Kunden 1).
Das Prozeßverwaltungsmodul 15 erhält als Ergebnis nur, daß die Zahlung mit der entsprechenden Prozeßnummer abgewickelt wurde oder nicht, im letzen Fall erfolgt eine entsprechende Fehlermeldung. Die Eigenschaften des entsprechenden Zahlungsmittels des spezifischen Zahlungssystems 4 (z.B. Anonymität) bleiben uneingeschränkt erhalten. Nach erfolgter Zahlung sendet das Prozeßverwaltungsmodul 15 die Prozeßnummer und die Bestätigung der eingegangenen Zahlung an den Händler 2.

### Verwendete Bezugszeichen

- 1: Kunde
- 2: Händler
- 3: Finanzdienstleister
- 4: Zahlungssystem
- 5: Netz
- 6: [a, b, c] geschlossene Datenverbindung
- 7: Datenverbindung
- 8: Vertragsmodul
- 9: Finanzdienstleister-DVA
- 10: Zahlungssystemadapter
- 11: spezifisches Vertragsmodul-Zahlungsmodul
- 12: spezifisches Kunden-Zahlungsmodul
- 13: Händler-Modul
- 14: Auswahl-Modul
- 15: Prozeßverwaltungsmodul
- 16: Risikomanagementmodul
- 17: Händlerverwaltungsmodul
- 18: Protokollwandlermodul
- 19: Händler-Vertragsprotokoll
- 20: spezifische Zahlungsanweisung
- 21: spezifische Zahlungssystem-DVA

## Patentansprüche

1. Verfahren zur rechnergestützten Zahlungsabwicklung über Zahlungssysteme, bei welchem ein Kunde (1) über eine Datenverbindung (6c) die Werbung eines Händlers (2) prüft, eine beidseitige Verpflichtung einzugehen beabsichtigt und die ihn interessierenden gewünschten Waren und Zahlungssysteme (4) auswählt, dadurch gekennzeichnet, daß
in einem 1. Schritt
der Kunde (1) seine gewünschten Waren und Zahlungssysteme (4) dem Händler (2) über die Datenverbindung (6c) mitteilt und danach durch den Händler (2) die Kundeninitialisierung des Kunden (1) erfolgt,
in einen 2. Schritt
der Händler (2) über eine Datenverbindung (6b) zu einem Vertragsmodul (8) bei einem Finanzdienstleister (3) die Konditionen für die gewünschten Zahlungssysteme (4) abfragt und dieses sie ihm sicher übermittelt,
in einem 3. Schritt
der Händler (2) über die Datenverbindung (6c) dem Kunden (1) sicher ein Auswahl-Modul (14) übermittelt, welches, jeweils einzeln für die gewünschten und verfügbaren Zahlungssysteme 4, das konkrete Angebot des Händlers (2) an den Kunden (1) beinhaltet,
in einem 4. Schritt
der Kunde (1) ein einzelnes konkretes Angebot des Händlers (2) im Auswahl-Modul (14) auswählt und damit eine beidseitige Verpflichtung eingeht, deren Inhalt das Auswahl-Modul (14) sicher über die Datenverbindung (6c) dem Händler (2) und sicher über die Datenverbindung (6b) dem Vertragsmodul (8) übermittelt, welches sie auf ihre Richtigkeit überprüft und unter der eindeutigen Prozeßnummer speichert,
in einem 5. Schritt
das Auswahl-Modul (14) die für das ausgewählte spezifische Zahlungssystem (4) verfügbare sichere Datenverbindung (6a) zwischen einem spezifischen Kunden-Zahlungsmodul (12) und dem zugeordneten spezifischen Vertragsmodul-Zahlungsmodul (11) aktiviert und den Inhalt der beidseitigen Verpflichtung dem spezifischen Zahlungssystem (4) übergibt,
in einem 6. Schritt
der Kunde (1) die notwendigen Ergänzungen in dem spezifischen Zahlungssystem (4) vornimmt und die Zahlungsabwicklung mit dem Händler (2) über das spezifische Kunden-Zahlungsmodul (12), die Datenverbindung (6a) und das spezifische Vertragsmodul-Zahlungsmodul (11) sicher anweist,
in einem 7. Schritt
das spezifische Vertragsmodul-Zahlungsmodul (11) die angewiesene Zahlungsabwicklung an eine spezifische Zahlungssystem-DVA (21) des spezifischen Zahlungssystembetreibers tätigt,
in einem 8. Schritt
das Vertragsmodul (8) die spezifische Zahlungssystem-DVA (21) des spezifischen Zahlungssystembetreibers liest, dessen Einträge mit dem gespeicherten Inhalt der beidseitigen Verpflichtung vergleicht und über die Datenverbindung (6b) den Händler (2) sicher über den Status der Zahlungsabwicklung informiert,
in einem 9. Schritt
die Überweisung von der spezifischen Zahlungssystem-DVA (21) auf das Konto des Händlers (2) erfolgt.

2. Verfahren zur rechnergestützten Zahlungsabwicklung über Zahlungssysteme nach Anspruch 1, dadurch gekennzeichnet,
daß der Händler (2) dem Finanzdienstleister (3) eine Gebühr entsprechend eines Vertrages zwischen dem Händler (2) und dem Finanzdienstleister (3) erstattet.

3. Verfahren zur rechnergestützten Zahlungsabwicklung über Zahlungssysteme nach einem der Ansprüche 1 oder 2, dadurch gekennzeichnet,
daß zur Gewährleistung einer sicheren Datenverbindung (6a), (6b), (6c) kryptographische Systeme verwendet werden, indem
im (3) Schritt
der Händler (2) ein teilweise verschlüsseltes Datenpaket an den Kunden (1) sendet,
im (4) Schritt
der Kunde (1) die Transaktionsdaten auf Identität prüft und eine Überprüfung des verschlüsselten Wareninhalts durchführt, nach dem Eingehen der beidseitigen Verpflichtung der Kunde (1) das Datenpaket über den Händler (2) an das Prozeßverwaltungsmodul (15) des Finanzdienstleisters (3) sendet, der Finanzdienstleister (3) selbst nur eine Prozeßnummer erhält, die Transaktion vom Vertragsmodul (8) angenommen und das eigentliche spezifische Vertragsmodul-Zahlungsmodul (11) aufgerufen wird, wobei die Prozeßnummer weitergeleitet wird,
im 6. Schritt
die Abwicklung der Zahlung zwischen der spezifischen Zahlungssystembetreiber und Kunden (1) entsprechend der Datensicherheit des spezifischen Zahlungssystems (4) erfolgt, das Prozeßverwaltungsmodul (15) nur als Ergebnis erhält, daß die Zahlung mit der entsprechenden Prozeßnummer abgewickelt wurde oder nicht, wobei im letzen Fall eine entsprechenden Fehlermeldung erfolgt, nach erfolgter Zahlung das Prozeßverwaltungsmodul (15) die Prozeßnummer und die Bestätigung der eingegangenen Zahlung an den Händler (2) sendet.
